# EUROPÄISCHE PATENTSCHRIFT

(11) **EP 1 348 890 B1**
(45) Veröffentlichungstag und Bekanntmachung des Hinweises auf die Patenterteilung: **26.10.2005**
(21) Anmeldenummer: 03006517.1
(22) Anmeldetag: 22.03.2003
(51) Int. Cl.: F16H 49/00

(54) **Getriebe mit umlaufendem Eingriffsbereich**
Transmission with revolving intermeshing area
Transmission à zone d'engrènement roulante

(30) Priorität: 30.03.2002 DE 20205040 U
(43) Veröffentlichungstag der Anmeldung: 01.10.2003
(73) Patentinhaber: Oechsler Aktiengesellschaft, 91522 Ansbach (DE)
(72) Erfinder: Poehlau, Frank, 90762 Fuerth (DE)
(74) Vertreter: Führing, Dieter

(56) Entgegenhaltungen:
- EP-A2- 1 079 086
- DE-U1- 29 614 738
- FR-A1- 2 628 810
- US-A- 4 237 751
- US-A- 5 129 868

## Beschreibung

Die Erfindung betrifft ein Getriebe gemäß dem Oberbegriff des Hauptanspruches.

Solche Getriebe sind als Wellgetriebe bekannt. Das Deutsche Gebrauchsmuster DE-U-296 14 738 offenbart ein Wellgetriebe mit den Merkmalen des Oberbegriffs des Hauptanspruches. Eine zweckmäßige Kombination eines Planetenradgetriebes und eines Wellgetriebes, auf die auch im Rahmen der unten dargestellten Erfindung vorteilhaft zurückgegriffen werden kann, ist in unserer älteren Patentanmeldung DE 1 01 49 255.3 vom 05. Oktober 2001 näher beschrieben.

Die Funktion des erwähnten - auch als Harmonic Drive oder als Ringband-Getriebe bekannten - Wellgetriebes als sehr stark untersetzendem, selbsthemmendem System mit zur Antriebswelle koaxialer Abtriebswelle beruht darauf, daß ein rotierender sogenannter Well-Generator einen nachstehend als Flexband bezeichneten Innenrad-Reifen umlaufend radial verformt und dadurch dessen Außenmantelfläche umlaufend lokal nach außen gegen die hohlzylindrische Innenmantelfläche geringfügig größeren Umfanges eines stationären, formstabilen Stützrings andrückt. Infolgedessen wälzt sich das Innenrad selbst bzw. ein darauf verdrehbar gelagertes Flexband kraftschlüssig über Reibflächen oder formschlüssig über Verzahnungen im Stützring ab, wobei sich das Flexband nach Maßgabe der Umfangsdifferenz zum Stützring langsamer als der motorisch angetriebene Triebkern des Wellgenerators dreht. Diese gegenüber dem Antrieb stark verlangsamte Drehbewegung wird vorzugsweise über die Außenverzahnung des Flexbandes auf die Innenverzahnung eines weiteren hohlzylindrischen Außenringes, des zum Stützring konzentrischen aber ihm gegenüber axial versetzten und nicht stationären Abtriebsringes übertragen, der seinerseits konzentrisch mit einer Abtriebswelle ausgestattet ist.

Bei den vom Deutschen Gebrauchsmuster 2 96 14 738 bekannten und in dem Beitrag "Genial einfach" von H. Hirn (KEM Antriebstechnik Heft 11/1996) näher beschriebenen Ausführungsformen solcher Wellgetriebe wird als Wellgenerator ein unrunder (im Axial-Querschnitt etwa dreieckförmiger oder bevorzugt ovaler) Triebkern konzentrisch in der Nabe des radial verformbaren Innenrades gedreht. Als radial orientierte Stößel wirkende, formstabile Speichen zwischen der vom Triebkern radial verformten Nabe und dem ebenfalls radial verformbaren, außen verzahnten Flexband bewirken, daß die Außenverzahnung entsprechend ihrer umlaufenden radialen Verformung jeweils nur über das darin abwälzende begrenzte Bogenstück mit der Innenverzahnung des Stützringes in Eingriff gerät. Beispielsweise in unserem Patent DE 1 00 10 156 ist veranschaulicht, daß die umlaufend radial verlagerbare Außenverzahnung ebensogut unmittelbar an den Köpfen von T-förmigen Stößeln wie an dem über diese Köpfe umlaufenden Flexband ausgebildet sein kann; wobei in letzterem Falle das Innenrad auch stillstehen kann, um als bloßer Führungskäfig für darin - mit dem Wellgenerator umlaufend - nacheinander radial gegen das darüber verlaufende Flexband verschiebbare Stößel zu dienen.

Die Drehrichtung der Abtriebswelle in Bezug auf diejenige der Antriebswelle ergibt sich danach, ob der Abtriebsring oder der Stützring einen größeren Umfang und dementsprechend eine größere Zähnezahl als das Flexband aufweist. Wenn bei einem ovalen, also zwei einander diametral gegenüberliegend umlaufende Eingriffszonen bewirkenden Well-generator beispielsweise ein Flexband mit 98 Zähnen bei gleicher Zähnezahl des Stützringes mit einem Abtriebsring im Eingriff steht, der 100 Zähne aufweist, besteht ein Untersetzungsverhältnis von 50:1 zwischen gleichsinnig drehenden Antriebs- und Abtriebswellen. Wenn dagegen ein Flexband mit 98 Zähnen bei gleicher Zähnezahl des Abtriebsringes mit einem Stützring in Eingriff steht, der 100 Zähne aufweist, dann besteht ein Untersetzungsverhältnis von 49:1 zwischen gegensinnig drehenden Antriebs- und Abtriebswellen.

Der Antrieb des Well-Generators erfolgt üblicherweise über einen der preiswert verfügbaren, hochtourigen Kleinspannungs-Gleichstrommotore. Der wird aus Kostengründen in der Regel in Zweipunktfunktion (nur im Ein-Aus-Zustand, gegebenenfalls noch mit Drehrichtungsumkehr) betrieben, also insbesondere ohne schaltungstechnisch aufwendige elektronische Drehzahl-Steuerung oder gar -Regelung. Ein solcher Motor wird dem Getriebegehäuse koaxial angeflanscht, um die Rotorbewegung in eine sehr viel langsamere Drehbewegung entsprechend größeren Drehmomentes an der Abtriebswelle des Getriebes zu untersetzen. Einsatz findet eine solche Motor-Getriebe-Kombination insbesondere bei elektromechanischen Verstelleinrichtungen etwa für Klappen, Spiegel, Sitze, Fenster u.dgl. im Motor- und im Fahrgastbereich eines Kraftfahrzeuges, aber auch in elektromechanischen Stelleinrichtungen auf anderen technischen Gebieten.

Wenn es eine derartige Anwendung erfordert, daß die über das Wellgetriebe resultierende Untersetzung verändert oder gar vorübergehend aufgehoben wird, dann muß dem Wellgetriebe ein konventionelles Schaltgetriebe in der Antriebswelle vor- oder in der Abtriebswelle nach-geschaltet werden, was aber hinsichtlich der nicht mehr insgesamt koaxialen Anordnung von Eingangs- und Ausgangswelle, infolge zusätzlicher verschleißanfälliger Funktionsteile und größeren Raumbedarfs, ganz abgesehen vom sich verschlechternden Gesamtwirkungsgrad, grundsätzlich nachteilig ist.

Der Erfindung liegt in Erkenntnis dieser Gegebenheiten die technische Problemstellung zugrunde, unter Beibehaltung seiner apparativen und anwendungsorientierten Vorteile das gattungsgemäße Wellgetriebe dahingehend weiterzuentwickeln, daß es nicht mehr erforderlich ist, auf externe Zusatzmaßnahmen im Kraftfluß vor oder hinter dem Getriebe zurückgreifen zu müssen, wenn im Zuge einer Drehmomentenübertragung dessen Untersetzungsfunktion einmal nicht benötigt wird.

Die im Hauptanspruch dazu angegebene Lösung hat zum Gegenstand, auch den Stützring im Getriebe drehbar zu lagern und ihn dann mit der Antriebswelle rotieren zu lassen, wenn keine getriebliche Untersetzung zur Rotation der Abtriebswelle auftreten soll. Diese Lösung erbringt den Vorteil, innerhalb des Getriebes selbst mittels einer einfachen Arretierungssteuerung, die vom Stützring aus wahlweise entweder zur Antriebswelle hin oder aber zum stationären Getriebegehäuse hin wirksam ist, zwischen einer Durchgangsfunktion (Überbrückung) und der konstruktiv vorgegebenen Untersetzungsfunktion (Drehzahlreduktion) der Getriebekinematik umschalten zu können.

Solche umsteuerbare Arretierung läßt sich z.B. elektromechanisch oder elektromagnetisch realisieren, etwa über verschiebbare Mitnehmer am Stützring oder über eine blockierbare Lagerung des Stützringes. Besonders zweckmäßig ist das dadurch realisierbar, daß ein Umschalten der Getriebefunktion mittels dessen Antriebsmotors erfolgt, nämlich in Abhängigkeit von der dem Getriebe antriebsseitig gerade eingeprägten Drehrichtung der Motorwelle. Dafür ist wenigstens zwischen dem Stützring und dem Getriebegehäuse, erforderlichenfalls aber auch vom Stützring zur Antriebswelle hin, ein Drehrichtgesperre eingeschaltet. Das bewirkt, daß abhängig von der Antriebs-Drehrichtung ein Freilauf vom Stützring zum benachbarten Getriebegehäuse hin blockiert oder freifällt, um im einen Falle infolge des dann stationären Stützringes das Flexband darin abwälzen zu lassen und so die starke Untersetzung zu erzielen, im anderen Falle dagegen infolge Mitdrehens des Stützringes ein Abwälzen des Flexbandes zu unterbinden und somit die Untersetzungsfunktion des Getriebes zu überbrücken.

Es kann also je nach der Antriebsrichtung der Eingangs- oder Antriebswelle des Getriebes dessen stark untersetzende Wirkung eines Wellgetriebes wirksam sein oder überbrückt werden. Dabei ergeben sich unterschiedliche Bauarten von Getrieben mit veränderbarer Untersetzung in Abhängigkeit davon, ob das Wellgetriebe hinsichtlich seiner Abtriebs- gegenüber seiner Antriebswelle gleichsinnig oder ungleichsinnig dreht. Wenn bei gleicher Drehrichtung von Antriebs- und Abtriebswelle ein Richtgesperre zwischen Stützring und Getriebegehäuse sperrt, während ein weiteres, zwischen Antriebswelle und Stützring gelegenes Richtgesperre im Freilauf ist, dann ist der Stützring wie schon erwähnt verdrehgesichert, und die Abtriebswelle dreht sich, bei gleicher Drehrichtung, langsamer als die Antriebswelle. Wenn die eingangsseitige Drehrichtung umgekehrt wird, läuft das Richtgesperre um Umgehäuse frei, während dasjenige zur Antriebswelle sperrt, weshalb nun keine Untersetzung stattfinden kann; da die Getriebefunktion nun gewissermaßen überbrückt ist, dreht die Abtriebwelle in gleicher Richtung und mit gleicher (hoher) Geschwindigkeit, wie die eingangsseitige Antriebswelle. Abhängig von der Drehrichtung rotiert bei dieser Auslegung deshalb die Abtriebswelle schnell oder langsam. Bei Einsatz der gleichen Richtgesperre in einem ungleichsinnigen Wellgetriebe dagegen dreht die Abtriebswelle langsamer als die gegensinnig rotierend Antriebswelle, wenn der Stützring gegen das Umgehäuse arretiert ist; während bei Freilauf gegenüber dem Umgehäuse wie schon erläutet die Untersetzungsfunktion des Getriebes gewissermaßen überbrückt ist, weil die Abtriebswelle nun mit gleicher Geschwindigkeit in gleicher Richtung dreht, wie die Antriebswelle. Somit liegt hier ein Getriebe vor, dessen Abtriebswelle stets gegensinnig zur Antriebswelle abhängig von der Drehrichtung schnell oder langsam rotiert. Abhängig von der ausgangsseitigen gegenüber der antriebsseitigen Drehrichtung wird durch eingangsseitige Drehrichtungsumkehr also entweder nur die ausgangsseitige Drehzahl oder aber zusätzlich auch noch deren Drehrichtung umgeschaltet.

In der Steuerungstechnik kommt es häufig vor, daß ein Stellelement sehr definiert eingestellt werden muß, beispielsweise eine Klappe in einem Fluidkanal oder ein Zeiger vor einer Skala. Dafür ist es zweckmäßig, das Stellelement zunächst in eine definierte Grundstellung zu verfahren, was recht schnell bewerkstelligt werden kann, und dann aus der heraus mit umgekehrter Antriebsrichtung die vorgegebene Sollstellung behutsam anzufahren. Dieser Ablauf erfolgt nun wie soeben beschrieben mit einem erfindungsgemäß ausgestatteten gleichsinnigen Wellgetriebe dadurch, daß der Antriebsmotor zunächst in Mitnahmerichtung für den Stützring dreht, also auch die ausgangsseitig an das Stellelement angeschlossene Abtriebswelle mit der nun nicht untersetzten hohen Drehzahl des Motors in die Grundstellung (etwa gegen einen Endanschlag) dreht; woraufhin der Antriebsmotor auf die entgegengesetzte Drehrichtung umgepolt wird, bei welcher der Stützring arretiert ist, so daß die nun ebenfalls umgekehrte aber stark untersetzte Drehung der Abtriebswelle das Stellelement zur Feineinstellung von der Grundstellung aus präzise in eine vorgegebene Sollstellung zurück bewegt.

Ein stark untersetzendes Getriebe mit in einem Stützring umlaufendem Eingriffsbereich, wie es als Planetenradgetriebe bekannt aber vorteilhafter als Wellgetriebe realisierbar ist, kann so wahlweise mit überbrückter oder mit wirksamer Reduktionsstufe betrieben werden, indem es mit einem dem Getriebegehäuse gegenüber nun verdrehbaren Stützring ausgestattet wird. Der wird für die normale Getriebefunktion (Reduktionsbetrieb) am Getriebegehäuse festgelegt, aber zum Überbrücken der Reduktionswirkung mit der Antriebswelle des Getriebes in Drehverbindung gesetzt. Dafür kann ein Drehrichtgesperre zwischen dem Stützring und dem umgebenden Getriebegehäuse angeordnet werden, so daß der Wechsel des Reduktionsbetriebes einfach über eine Drehrichtungsumkehr der eingangsseitigen Antriebswelle des Getriebes umgesteuert werden kann. Auf diese Weise ist z.B. ein rotatorisches oder lineares Stellelement, auf das der Abtriebsring des Getriebes arbeitet, durch bloßes Umpolen des Antriebsmotors zunächst im Eilgang etwa in eine kalibrierende Endstellung und dann daraus zurück im Schleichgang in eine präzise einzunehmende Sollstellung verfahrbar.

Derart vielseitige Einsatzmöglichkeiten eröffnet die Erfindung ohne besonderen schaltungstechnischen oder apparativen Zusatzaufwand mit außerordentlich einfachen Steuerungseingriffen direkt in das Getriebe, ohne dafür dessen wirksamen axialen Abmessungen infolge von dem eigentlichen Getriebe vorausgehenden oder nachfolgenden Schaltgetrieben vergrößern zu müssen.

Bezüglich weiterer Vorteile und zusätzlicher Weiterbildungen zur erfindungsgemäßen Lösung wird, außer auf die weiteren Ansprüche, auch auf nachfolgende Beschreibung von nicht maßstabsgerecht auf das Funktionswesentliche vereinfacht skizzierten Wellgetrieben als bevorzugten Realisierungsbeispielen Bezug genommen. In der Zeichnung zeigt, jeweils im Axial-Längsschnitt,
- Fig. 1: das auf dem wahlweise arretierbaren oder mitdrehbaren Stützring beruhende Funktionsprinzip des Wellgetriebes mit innerer Überbrückungsmöglichkeit seiner Getriebefunktion,
- Fig.2: die Realisierung der umschaltbaren Stützring-Arretierung mittels axial beiderseits des Stützringes angeordneter und gegensinnig wirkender Rotations-Freiläufe,
- Fig.3: eine konstruktiv vereinfache Ausführungsform gegenüber derjenigen nach Fig.2 und
- Fig.4: ein Beispiel für eine der zweckmäßigen Kaskadierungsmöglichkeiten von Wellgetrieben, unter Einsatz wenigstens eines Getriebes mit erfindungsgemäß wahlweise zur Rotation freigegebenem oder arretiertem Stützring.

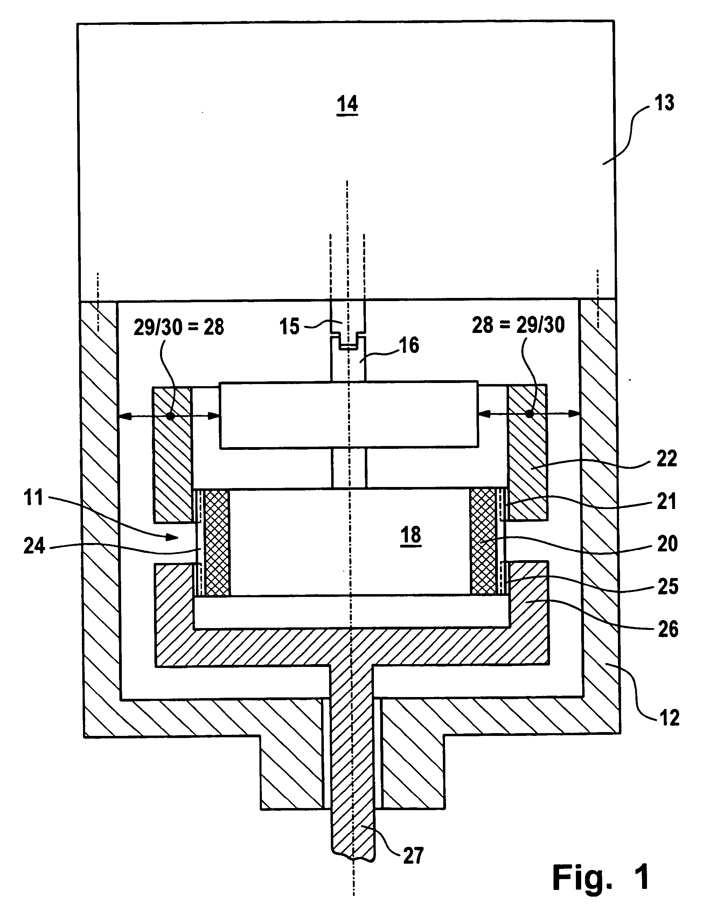

Das in Fig. 1 unter Beschränkung auf das Funktionswesentliche abstrahiert skizzierte Wellgetriebe 11 als bevorzugtes Realisierungsbeispiel für ein Getriebe mit umlaufendem Verzahnungseingriff ist mit seinem Getriebegehäuse 12 drehfest an das stationäre Motorgehäuse 13 eines Antriebsmotors 14 angeflanscht. Dessen Rotorwelle 15 ist über die Antriebswelle 16 des Wellgetriebes 11 eingangs näher erläuterter Art drehfest koaxial mit dessen Wellgenerator 18 verbunden. Der bewirkt das beschriebene umlaufende radiale Verformen eines Flexbandes 20, das sich dabei längs der Innenverzahnung 21 eines stationären Stützringes 22 abwälzt. Axial benachbart steht die Außenverzahnung 24 des Flexbandes 20 zugleich mit der Innenverzahnung 25 eines im Getriebegehäuse 12 drehbar gelagerten Abtriebsringes 26 in Eingriff, der drehstarr mit der zur Antriebswelle 16 koaxialen Abtriebswelle 27 des Getriebes 11 ausgestattet ist.

Die Abtriebswelle 27 dreht sich mit gleicher Drehzahl und in gleicher Drehrichtung wie die Antriebswelle 16, wenn eine als zweifacher Pfeil symbolisierte umschaltbare Arretierung 28 den Stützring 22 nach innen, an die Antriebswelle 16 und somit an den Generator 18 drehstarr festlegt. Denn weil dann der Generator 18 nicht mehr relativ zum Stützring 22 dreht, wälzt das Flexband 19 sich nicht längs dessen Innenverzahnung 21 ab und führt somit auch nicht zum Verdrehen des Abtriebsringes 26 relativ zum Generator 18. Das Getriebe 11 ist also funktional überbrückt, es liefert in dieser Funktionsstellung der Arretierung 28 ausgangsseitig die gleiche Kinematik, wie sie eingangsseitig vorgegeben wird (Untersetzung 1:1 ohne Drehrichtungsumkehr).

Wenn dagegen der Stützring 22 mittels der Arretierung 28 radial vom Wellgenerator 18 fort nach außen, an das Getriebe-Gehäuse 12 drehstarr festgelegt wird, dreht sich der Generator 18 im Flexband 19 relativ zum Stützring 22, in dem deshalb das umlaufend radial verformte Flexband 19 in der gleichen Richtung umläuft, in der sich der Generator 18 dreht. Dadurch nimmt das Flexband 19 den Abtriebsring 26 mit und dreht so die Abtriebswelle 27. Deren Drehzahl und Drehrichtung wird vom Verzahungsunterschied beiderseits des Flexbandes 19 bestimmt. Wenn beispielsweise die Stützring-Verzahnung 21 mit der Flexband-Verzahnung 24 übereinstimmt, aber nicht mit der etwas größeren Innenverzahnung 25 des Abtriebsringes 26, dann wird die Drehrichtung von der Antriebswelle 16 zur Abtriebswelle 27 beibehalten. Andererseits dreht sie sich um, wenn die Abtriebs-Verzahnung 25 mit der Flexband-Verzahnung 24 übereinstimmt, bei dagegen etwas häufigerer Stützring-Verzahnung 21.

So läßt sich - bei konstruktiv vorgegebenem abtriebsseitigem Drehsinn relativ zum antriebsseitigen - durch bloßes Umsteuern der Arretierung 28 die Getriebeuntersetzung aus- und einschalten.

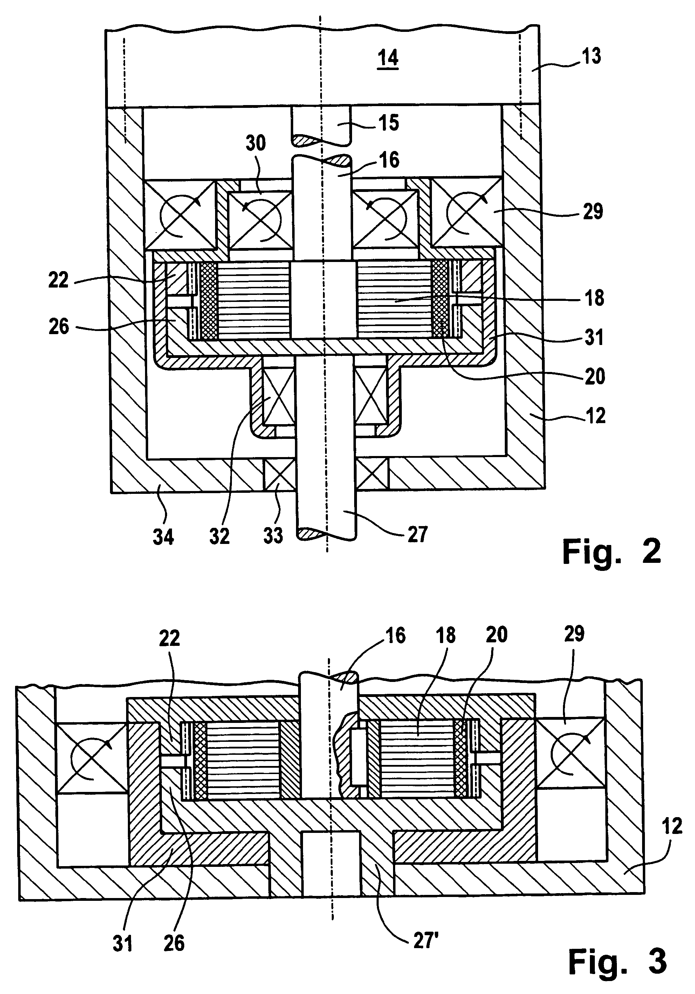

Dieses Umsteuern kann z.B. mittels fluidisch angetriebener Riegel erfolgen, oder elektrisch etwa durch eine elektromagnetische oder elektromechanische Arretierung 28 des Stützringes 22 wahlweise zum Getriebegehäuse 12 oder zum Generator 18 mit seiner Antriebswelle 16. Gemäß den gegenüber Fig.1 konstruktiv detaillierter ausgeführten Skizzen Fig.2 ff erfolgt das Umsteuern in Fig.2 in Abhängigkeit von der antriebsseitigen Drehrichtung mittels zweier gegensinnig zueinander wirkender Richtgesperre 29, 30, die zwischen dem nun im Querschnitt abgekröpft verlaufenden Stützring 22 und einerseits dem Getriebegehäuse 12 bzw. andererseits der Antriebswelle 16 wirken. In deren einer Drehrichtung blockiert das Richtgesperre 30, so daß der Stützring 22 mit der Antriebswelle 16 mitdreht und das Getriebe 11 mangels Abstützung des Flexbandes 20 keine Untersetzung liefert; während in der anderen Drehrichtung der Antriebswelle 16 dieses Richtgesperre 30 freiläuft, aber das Richtgesperre 29 zum Gehäuse 12 hin blockiert und so den Stützring 22 am Getriebegehäuse 12 stationär festlegt. Wie oben schon erläutert hat also das bloße Umkehren der Eingangs-Drehrichtung des Getriebes 11 dessen Übergang zum Untersetzungsbetrieb zur Folge.

Derartige Richtgesperre können, wie aus der Feinwerk- und Antriebstechnik als solches bekannt, bevorzugt etwa als Ratschen mit angespritzten, in Sperrichtung tangential abstützenden Federarmen oder als Freiläufe mit in Sperrichtung in bogenförmig verlaufende Verjüngungen einklemmenden Wälzkörpern zwischen rotierenden und stationären Konstruktionsteilen (hier dem Stützring 22 gegenüber einerseits dem Gehäuse 12 und andererseits der Antriebswelle 16) ausgebildet sein.

Während bei der Ausführung gemäß Fig.2 eine haubenförmige Verlängerung 31 des Stützringes 22 in einer Aufnahme für ein Wälzlager 32 auf der Abtriebswelle 27 endet, die ihrerseits mit einem Wälzlager 33 im Deckel 34 des Getriebegehäuses 12 geführt ist, zeigt Fig.3 eine demgegenüber vereinfachte konstruktive Realisierung des erfindungsgemäß umschaltbaren Getriebes 11. Statt der Wälzlager (32, 33 in Fig.2) sind nun gleitende Lagerstellen vorgesehen; und vor allem ist das innere Richtgesperre (30 in Fig.2) nun entfallen. Das ist möglich, weil über das Flexband 20 regelmäßig ein vergleichsweise hohes Anlaufmoment dem Stützring 22 gegenüber herrscht. Bei einer Antriebsrichtung mit Freilaufeigenschaft für das Richtgesperre 29 vom Stützring 22 nach außen, zum Getriebegehäuse 12 hin, wird der Stützring 22 deshalb beim Anlauf mitgedreht, auch ohne daß ein blockierendes Richtgesperre (30 in Fig.2) den Stützring 22 an die Antriebswelle 16 bindet. Bei umgekehrter Antriebsrichtung dagegen blockiert das Richtgesperre 29 zum Getriebegehäuse 12 hin stärker als das Losbrechmoment zur Abtriebswelle 27' hin, weshalb diese zusammen mit ihrem Generator 18 dann gegenüber dem nun stationären Stützring 22 dreht, das Getriebe 11 nun also eine Untersetzung liefert.

In der eigenen älteren Patentanmeldung DE 1 01 05 814.4 vom 08. 02. 2001 ist dargelegt, daß es wegen der bauartbedingten Beschränkung der praktisch realisierbaren Untersetzungsverhältnisse bei Wellgetrieben zweckmäßig sein kann, Wellgetriebe mit unterschiedlichen Untersetzungen zu kaskadieren, um eine bestimmte Getriebewirkung zu erzielen.

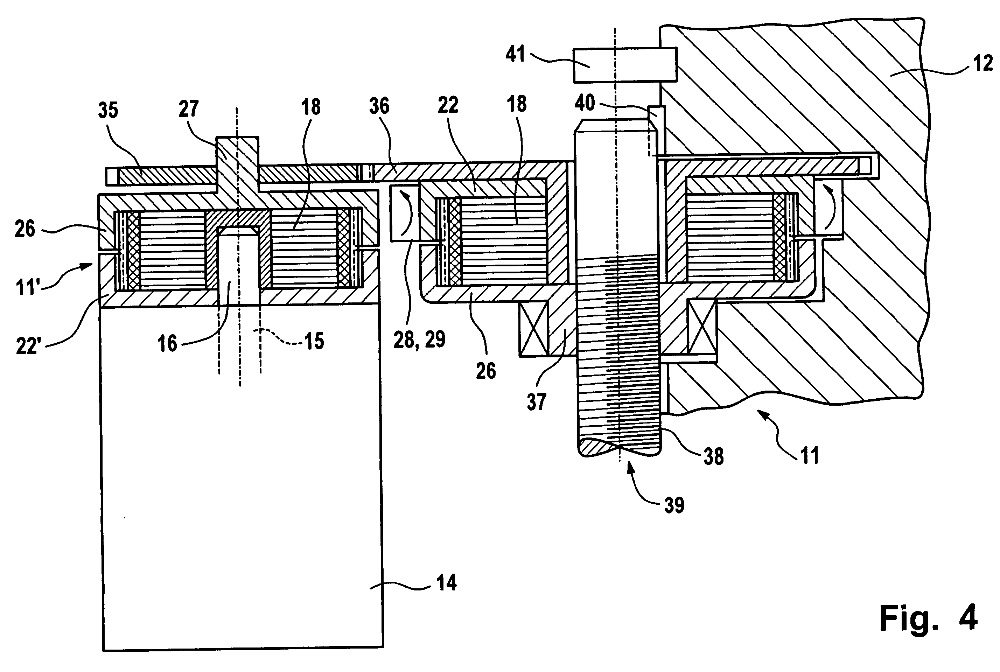

Dementsprechend ist auch die Kaskadierung von erfindungsgemäßen Wellgetrieben (also mit der Freigabemöglichkeit für den Stützring zur Überbrückung der Getriebefunktion) untereinander oder in Kombination mit herkömmlichen Bauarten (also mit ortsfest montierten Stützringen) vorteilhaft. Auf ein Beispiel dafür bezieht sich die in Fig.4 skizzierte Anordnung. Deren Antriebsmotor 14 arbeitet auf den Wellgenerator 18 zwischen ortsfestem Stützring 22' und verdrehbarem Abtriebsring 26 eines herkömmlichen, nicht überbrückbaren Wellgetriebes 11'. Auf dessen Abtriebswelle 27 steht ein Ritzel 35 mit einem Eingangs-Ritzel 36 an der hier hohlen Antriebswelle 16 für den Wellgenerator 18 eines überbrückbaren Wellgetriebes 11 entsprechend der Bauform aus Fig.3 in Eingriff.

Die beiden Ritzel 35-36 zur Drehbewegungsübertragung zwischen den beiden Wellgetrieben 11'-11 können koaxial voreinander angeordnet sein und etwa über Kronverzahnungen miteinander kämmen. Bei der Ausbildung nach Fig.4 sind sie aber in einem gemeinsamen Umgehäuse 12 mittels Stirnverzahnungseingriff achsparallel nebeneinander angeordnet. Im Gegensatz zur nicht überbrückbaren Reduktionsstufe des ersten Wellgetriebes 11' ist das zweite als Hohlgetriebe 11 ausgelegt. Auf dessen Antriebswelle 16 ruht verdrehbar der Stützring 22, der aber mittels einer Arretierung 28 - hier in der Bauform eines drehrichtungsabhängigen Gesperres 29 - am stationären Getriebegehäuse 12 festlegbar ist. In den Abtriebsring 26 ist in Form einer kurzen hohlen, im Gehäuse 12 gelagerten Abtriebswelle 27 eine Spindelmutter 37 integriert, die in das Schneckengewinde 38 einer Spindel 39 eingreift, welche eine achsparallel verlagerbare Nut-Feder-Passung als Verdrehsicherung 40 dem stationären Getriebegehäuse 12 gegenüber aufweist. Die Spindel 39 dient als ein das Wellgetriebe 11 konzentrisch durchragendes Linearstellglied, das bei der einen Drehrichtung des Antriebsmotors 14 im Eilgang in einer Vorschubrichtung durch das Stellgetriebe 11 hindurch z.B. bis gegen einen ortsfesten Endschalter 41 verfahren wird, um nach Drehrichtungsumkehr des Motors 14 dann extrem langsam, präzise und reproduzierbar in eine momentan aus einer übergeordneten Funktionssteuerung vorgegebene Sollstellung zurück bewegt zu werden.

Während für den Beispielsfall der Fig. 4 eine Kaskadierung mit einem nicht überbrückbaren Wellgetriebe 11' vorgesehen ist, stellt sich eine oft wünschenswerte wesentlich größere Spreizung der Untersetzung bei Kaskadierung von Wellgetrieben 11 mit wahlweiser Überbrückung der Getriebeuntersetzung durch Freigeben eines Verdrehens des Stützringes ein. So ergibt, um einige Zahlenbeispiele einander gegenüberzustellen, die Kombination eines beliebigen Wellgetriebes 11 unüberbrückbarer Untersetzung 20:1 mit einem gleichsinnigen Wellgetriebe 11 überbrückbarer Untersetzung 20:1 abhängig von der Antriebsrichtung Untersetzungsverhältnisse 400:1 oder 20:1 bei unterschiedlichen Abtriebsdrehrichtungen; aber die Kaskadierung eines wiederum beliebigen unüberbrückbaren Wellgetriebes 20:1 mit einem gegensinnigen überbrückbaren Welletriebe von ebenfalls 20:1 ein von der antriebsseitigen Drehrichtung abhängiges Umschalten zwischen Normalgang 20:1 und Schleichgang 400:1 bei gleichbleibender abtriebsseitiger Drehrichtung. Zwei überbrückbare gleichsinnige Wellgetrieben 20:1 kaskadiert liefern dagegen in der einen Antriebsrichtung 1:1 und in der entgegengesetzten 400:1 bei unterschiedlichen Abtriebsdrehrichtungen und zwei überbrückbare gegensinnige Wellgetriebe 20:1 kaskadiert abhängig von der Antriebsdrehrichtung bei gleichbleibender Abtriebsdrehrichtung entweder 1:1 oder 400:1 Gesamtuntersetzung.

## Patentansprüche

1. Wellgetriebe (11) mit zu seiner Abtriebswelle (27) koaxialer Antriebswelle (16) und der Drehbewegung der motorisch bewegten Antriebswelle (16) gegenüber untersetzt umlaufendem Eingriffsbereich in einen Stützring (22), und mit einem innerhalb des Stützringes (22) und eines im stationären Getriebegehäuse (12) verdrehbar gelagerten Abtriebsringes (26) umlaufenden Flexband (20), **dadurch gekennzeichnet, daß** auch der Stützring (22) im Getriebegehäuse (12) verdrehbar gelagert aber mittels einer umschaltbaren Arretierung (28) wahlweise entweder zur Überbrükkung der Getriebeuntersetzung mit der Antriebswelle (16) oder aber zur Freigabe der Getriebeuntersetzung mit dem Getriebegehäuse (12) verbunden ist.

2. Getriebe nach Anspruch 1, **dadurch gekennzeichnet, daß** die Arretierung (28) als umschaltbare Verriegelung ausgebildet ist.

3. Getriebe nach Anspruch 1, **dadurch gekennzeichnet, daß** die Arretierung (28) als Richtgesperre (29, 30) ausgebildet ist.

4. Getriebe nach dem vorangehenden Anspruch, **dadurch gekennzeichnet, daß** der Stützring (22) mit zwei gegensinnig wirkenden Freiläufen ausgestattet ist.

5. Getriebe nach dem vorangehenden Anspruch, **dadurch gekennzeichnet, daß** die Freiläufe mit umlaufenden Klemmkugeln oder mit tangentialen Stauchfederarmen zwischen dem Stützring (22) und einerseits dem Getriebegehäuse (12) sowie andererseits der Antriebswelle (16) ausgestattet sind.

6. Getriebe nach Anspruch 1, **dadurch gekennzeichnet, daß** ein Gleitlager als überwindbare Arretierung (28) zwischen der Antriebswelle (16) und dem Stützring (22) vorgesehen ist.

7. Getriebe nach einem der vorangehenden Ansprüche, **dadurch gekennzeichnet, daß** es mit einer Abtriebswelle (27) als ein Stellglied einsetzbar ist, das je nach der Drehrichtung der Antriebswelle (16) in der einen Bewegungsrichtung im Eilgang und in der anderen Bewegungsrichtung im Schleichgang arbeitet.

8. Getriebe nach einem der vorangehenden Ansprüche, **dadurch gekennzeichnet, daß** es als Hohlgetriebe ausgestaltet ist, dessen Abtriebsring (26) mit einer Mutter (37) zum Eingriff in das Außengewinde (38) einer koaxial darin längsbeweglichen Spindel (39) ausgestattet ist.

9. Getriebe nach einem der vorangehenden Ansprüche, **dadurch gekennzeichnet, daß** es mit einem Wellgetriebe (11') im nicht überbrückbarer Bauform kaskadiert ist.

10. Getriebe nach einem der vorangehenden Ansprüche, **dadurch gekennzeichnet, daß** es mit einem Wellgetriebe (11) in überbrückbarer Bauform kaskadiert ist.

## Claims

1. A harmonic drive (11) with an input shaft (16) that is arranged coaxial to its output shaft (27), wherein the intermeshing area with a back-up ring (22) revolves with a stepped-down gear ratio referred to the rotation of the motor-driven input shaft (16), and with a flex band (20) that revolves within the back-up ring (22) and an output ring (26) that is rotatably supported in the stationary drive housing (12), **characterized in that** the back-up ring (22) is also rotatably supported in the drive housing (12), however, such that it can be selectively connected to the input shaft (16) in order to bypass the gear reduction or to the drive housing (12) in order to enable the gear reduction, namely by means of a reversible locking device (28).

2. The drive according to claim 1, **characterized in that** the locking device (28) is realized in the form of a reversible interlock.

3. The drive according to claim 1, **characterized in that** the locking device (28) is realized in the form of a directional blocking mechanism (29, 30).

4. The drive according to the preceding claim, **characterized in that** the back-up ring (22) is equipped with two oppositely acting free-wheels.

5. The drive according to the preceding claim, **characterized in that** the free-wheels are equipped with revolving balls or with tangential compression spring arms between the back-up ring (22) and the drive housing (12) on one hand and the input shaft (16) on the other hand.

6. The drive according to claim 1, **characterized in that** a sliding bearing in the form of a negotiable locking device (28) is provided between the input shaft (16) and the back-up ring (22).

7. The drive according to one of the preceding claims, **characterized in that** it can be utilized as an actuator with an output shaft (27), wherein said actuator operates with a high speed in one moving direction and with a slow speed in the other moving direction depending on the rotating direction of the input shaft (16).

8. The drive according to one of the preceding claims, **characterized in that** it is realized in the form of a hollow drive, the output ring (26) of which is equipped with a nut (37) that engages with the external thread (38) of a spindle (39) that can be coaxially displaced in said nut in the longitudinal direction.

9. The drive according to one of the preceding claims, **characterized in that** it is cascaded with a harmonic drive (11') in the form of a design without bypass option.

10. The drive according to one of the preceding claims, **characterized in that** it is cascaded with a harmonic drive (11) in the form of a design with bypass option.

## Revendications

1. Transmission à arbre (11) comportant un arbre menant (16) coaxial à son arbre mené (27) et une zone d'engrènement tournant avec une démultiplication par rapport au mouvement de rotation de l'arbre menant (16) déplacé de manière motorisée dans un anneau de support (22), et une bande flexible (20) tournant à l'intérieur de l'anneau menant (26) et d'un anneau mené (26) s'appuyant en rotation dans le carter de transmission stationnaire (12), **caractérisée en ce que** l'anneau de support (22) s'appuie aussi en rotation dans le carter de transmission (12), mais au moyen d'un dispositif d'arrêt commutable (28) au choix soit pour neutraliser la démultiplication par rapport à l'arbre menant (16), soit pour libérer la démultiplication par rapport au carter de transmission (12).

2. Transmission selon la revendication 1, **caractérisé en ce que** le dispositif d'arrêt (28) est réalisé sous forme d'un verrouillage commutable.

3. Transmission selon la revendication 1, **caractérisé en ce que** le dispositif d'arrêt (28) est réalisé sous forme d'un système de blocage directionnel (29, 30).

4. Transmission selon la revendication précédente, **caractérisé en ce que** l'anneau de support (22) est équipé de deux roues libres agissant à contresens.

5. Transmission selon la revendication précédente, **caractérisé en ce que** les roues libres sont équipées de sphères de blocage tournantes ou de bras à ressort de refoulement tangentiels entre l'anneau de support (22) et le carter de transmission (12) d'une part ainsi que l'arbre menant (16) d'autre part.

6. Transmission selon la revendication 1, **caractérisé en ce qu'**il est prévu un palier à glissement servant de dispositif d'arrêt contournable (28) entre l'arbre menant (16) et l'anneau de support (22).

7. Transmission selon une des revendications précédentes, **caractérisé en ce qu'**elle est utilisable avec un arbre mené (27) servant d'élément de réglage fonctionnant en fonction du sens de rotation (16) de l'arbre menant (16) en marche rapide dans un sens de mouvement et en marche lente dans l'autre sens de mouvement.

8. Transmission selon une des revendications précédentes, **caractérisé en ce qu'**elle se présente sous forme d'une transmission creuse dont l'anneau mené (26) est équipé d'un écrou (37) s'engrenant dans le filetage extérieur (38) d'une broche (39) mobile longitudinalement et coaxialement dedans.

9. Transmission selon une des revendications précédentes, **caractérisé en ce qu'**il est en cascade avec une transmission à arbre (11') dans une forme de construction sans possibilité de neutralisation.

10. Transmission selon une des revendications précédentes, **caractérisé en ce qu'**il est en cascade avec une transmission à arbre (11) dans une forme de construction avec possibilité de neutralisation.
